# EUROPÄISCHE PATENTSCHRIFT

(11) **EP 3 191 545 B1**
(45) Veröffentlichungstag und Bekanntmachung des Hinweises auf die Patenterteilung: **25.04.2018**
(21) Anmeldenummer: 15770463.6
(22) Anmeldetag: 09.09.2015
(51) Int. Cl.: C08L 23/16, C09J 123/12, C09J 123/16, C08L 23/12

(54) **HAFTUNGSMODIFIZIERTE OLEFINISCHE THERMOPLASTISCHE ELASTOMERE, INSBESONDERE TPE-V, TPE-O**
ADHESION-MODIFIED OLEFINIC THERMOPLASTIC ELASTOMERS, IN PARTICULAR TPE-V, TPE-O
ÉLASTOMÈRES OLÉFINIQUES THERMOPLASTIQUES À ADHÉRENCE MODIFIÉE, EN PARTICULIER TPE-V, TPE-O

(30) Priorität: 11.09.2014 DE 102014218260
(43) Veröffentlichungstag der Anmeldung: 19.07.2017
(73) Patentinhaber: Albis Plastic GmbH, 20539 Hamburg (DE)
(72) Erfinder: FRAHN, Jörg, 28865 Lilienthal (DE); LICHTENAUER, Nick, 25421 Pinneberg (DE)
(74) Vertreter: Knoop, Philipp
(86) Internationale Anmeldenummer: PCT/EP2015/070609
(87) Internationale Veröffentlichungsnummer: WO 2016/038089

(56) Entgegenhaltungen:
- EP-A1- 0 603 580
- WO-A1-2004/035678
- WO-A1-2011/041533
- WO-A2-02/055599
- US-A- 5 798 413

## Beschreibung

Die vorliegende Erfindung betrifft haftungsmodifizierte thermoplastische Elastomere, nämlich die olefinischen TPE-V's und TPE-O's gemäß dem Oberbegriff des Patentanspruchs 1.

Thermoplastische Elastomere (TPE) sind Werkstoffe, bei denen elastische Polymerketten in thermoplastisches Material eingebunden sind, die ihnen gummielastische Eigenschaften verleihen. Aufgrund der unter Wärme auflösbaren, in Teilbereichen vorhandenen physikalischen Vernetzungspunkte ändern sich die Werkstoffeigenschaften von thermoplastischen Elastomeren nichtlinear über Zeit und Temperatur. TPE's sind von nicht-polarer-Natur, sie werden nach ihrem inneren Aufbau in Blockcopolymere und Elastomerlegierungen unterschieden.

Blockcopolymere besitzen innerhalb eines Moleküls Hart- und Weichsegmente. Der Kunststoff besteht also aus einer Molekülsorte, in der beide Eigenschaften verteilt sind. Beispiele für Blockcopolymere sind SBS oder SIS oder auch TPE-U.

Elastomerlegierungen sind demgegenüber Polyblends, also Gemenge von fertigen Polymeren. Der fertige Kunststoff besteht daher aus mehreren Molekülsorten. Durch geeignete Wahl von Mischungsverhältnissen und Art und Menge von Zuschlagmitteln erhält man maßgeschneiderte Werkstoffe, die einen weiten Härtebereich abdecken. Für die Erfindung sind die olefinischen TPE von besonderem Interesse, nämlich in erster Linie die vulkanisierbaren TPE-V aber auch die nicht vulkanisierten TPE-O, vorzugsweise solche TPE, die auf PP/EPDM beruhen.

In der Technik ist es oft gewünscht, polare Substrate mit TPE's haftend zu beschichten oder so Sandwichstrukturen herzustellen.

Unter Haftung wird dabei eine Erscheinung zwischen zwei Substraten verstanden, die auf zwischenmolekularen Wechselwirkungen an der Phasengrenzflächen fest/fest beruht und als Widerstand gegenüber einer trennenden Beanspruchung in Erscheinung tritt. Haftung kann auch bezeichnet werden als Zustand, in welchem zwei Oberflächen durch Valenzkräfte, durch mechanische Verankerung oder beides zusammengehalten werden. Haften durch mechanisches Verankern kann durch Aufrauen, Hinterschneiden, oder allgemein durch Form- oder Kraftschluß erreicht werden. Haften durch überwiegend physikalische Bindung ist erreichbar mittels elektrischer Anziehung wie von van der Waals-Wechselwirkungen oder Wasserstoffbrückenbindungen. Haften durch Stoffschluß ist erreichbar über chemische Bindungen, insbesondere über die Bildung kovalenter Bindungen zwischen dem zu beschichtenden polaren Substrat und dem aufgetragenen Haftstoff, bzw. dem aufgebrachten TPE.

Polare Substrate wie Glas, Metalle, Stahl, Polyamide, thermoplastische Harze, anorganische Trägermaterialien, etc. lassen sich bislang nur schwer mit TPE in Haftung bringen, insbesondere nur schwer durch die üblichen und gewünschten Verfahren wie Pressen, Co-Molding, Overmolding, Co-Extrudieren oder Verspritzen.

Zur Erzeugung einer Haftung war die Behandlung der zu beschichtenden Substratoberfläche durch Aufrauen mittels Ätzmitteln, einer Flammenbehandlung, Ozon und dergleichen mehr bekannt. Diese Oberflächenbehandlung führt jedoch zu einer grundsätzlichen Produktverschlechterung und benötigt einen zusätzlichen Fertigungsschritt. Beispielsweise offenbaren die DE 10 2007 023 418 A1 ein Aufrauen und die DE 10 2009 051 717 A1 ein Aufrauen durch eine Plasmabehandlung.

Zur Erzeugung einer Haftung war auch das Auftragen eines Coatings auf das Substrat bekannt, bevor anschließend eine Beschichtung mit TPE erfolgt. Auch diese haftungsvermittelnden Coatings müssen in einem eigenen Arbeitsschritt auf das Substrat aufgetragen und anschließend getrocknet, bzw. gehärtet werden, was nachteilig ist.

Zur Erzeugung einer Haftung war auch bekannt, haftende thermoplastische Elastomerzusammensetzungen mit gepfropftem Maleinsäureanhydridpolypropylen (MAH-PP) zu versehen, so dass das MAH-PP eine gewisse Polarität in die Elastomerzusammensetzungen einbrachte. Hierbei kann jedoch die resultierende Gesamthärte so zunehmen, dass zum Erhalt der geringen Ausgangshärte des TPE weitere Additive wie Blockcopolymere aus Styrol/konjugiertem Dien/Styrol zugegeben werden mussten (WO 95/26380 A1).

Aus der DE 698 03 448T2 ist schließlich eine TPE-Zusammensetzung bekannt, die zur Adhäsion an polaren Substraten geeignet ist, nämlich an Polyamiden (PA). Diese Schrift offenbart, neben einem TPOE (Blend aus einem thermoplastischen Polyolefinharz und einem Kautschuk wie EPDM) oder einem STPE (thermoplastisches elastomeres Blockcopolymer auf Styrolbasis) 2 bis 60 Gew.-% eines Haftfähigkeitsvermittlers vorzusehen, der ein Reaktionsprodukt eines Polyamids mit einem funktionalisierten Kautschuk sein soll. Hierbei ist der funktionalisierte Kautschuk ein Blockcopolymer auf Styrolbasis oder ein EAM oder EADM-Kautschuk. Diese Haftvermittlung verläuft nach dem Prinzip einer physikalischen Haftung, wonach Gleiches Gleiches löst.

Aus der WO 02/055599 A2 sind thermoplastische Elastomere bekannt.

Die vorliegende Erfindung stellt sich daher die Aufgabe, ein TPE - insbesondere ein TPE-V und ein TPE-O - gemäß dem Oberbegriff des Patentanspruchs 1 anzugeben, mit dem eine besonders gute Haftung auf polaren Substraten erreichbar ist, ohne dass die Substratoberfläche vorbehandelt werden müsste und ohne Zwischenschaltung eines Coatings.

Diese Aufgabe wird durch eine olefinische thermoplastische Elastomerzusammensetzung gemäß Patentanspruch 1 gelöst, die eine vernetzbare Kautschuk-Komponente, ein Polyolefin und ein Haftvermittlersystem aufweist, wobei das Haftvermittlersystem seinerseits einen oder mehrere erste Haftvermittler aus der Gruppe der benetzenden Haftvermittler und einen oder mehrere zweite Haftvermittler aus der Gruppe der chemisch reaktiven Haftverbinder aufweist. Vorteilhafte Ausführungen finden sich in den Unteransprüchen

Überraschenderweise ergab sich durch Zufügen eines kombinierten Haftvermittlersystems aus benetzungsaktiven Haftvermittlern und chemisch reaktiven Haftvermittlern eine sehr gute Haftung des so haftungsmodifizierten TPE auf polaren Substraten auch bei jeder der Verarbeitungsarten Pressen, Co-Molding, Overmolding, Co-Extrudieren oder Verspritzen bei unverändert guten mechanisch und elastischen Eigenschaften des modifizierten TPE. Die erfindungsgemäße Kombination der beiden Haftmechanismen: "Chemische Bindung" und "Physikalisches Haften" führt zu einer sehr dauerhaften und starken Haftung des erfindungsgemäßen TPE-V's an den polaren Substraten. Die zu beschichtenden polaren Substrate müssen nicht länger vorbehandelt werden, auf die der Verwendung zusätzlicher Haftmittel wie Coatings kann ebenfalls mit Vorteil verzichtet werden.

Hierbei ist es wichtig, eine Kombination von ein bis vier Haftvermittlern aus der Gruppe der benetzenden Haftvermittler zu wählen, um so einen optimalen Oberflächenkontakt in Fläche und Abstand zu erzeugen. Durch optimale Ausnutzung der Oberflächenfläche wird die mechanische Verankerung durch Ausnutzen der vorhandenen Unebenheiten der Substratoberfläche verbessert. Durch das erfindungsgemäß sehr gute Benetzen wird auch der Abstand des Substrats zum TPE verringert, so dass die physikalischen und chemischen Bindungen verstärkt entstehen können. Über die durch die gute Benetzung ermöglichte große Kontaktfläche zwischen Substrat und TPE wird schließlich auch die Anzahl der Bindungen erhöht.

Hierbei ist es genauso wichtig, zusätzlich eine Kombination von ein bis vier Haftvermittlern aus der Gruppe der chemisch reaktiven Haftvermittler zu wählen und beide Gruppen dem TPE zuzufügen, so dass auch eine Haftung durch chemische Bindung ermöglicht ist. Diese zweiten Haftvermittler verfügen über eine oder mehrere gleiche oder unterschiedliche chemisch aktive funktionelle Gruppen, die für eine Reaktion mit den funktionellen Gruppen der polaren Substrate geeignet sind. Dabei können Haftvermittlerbedingt auch einige zusätzlich als Benetzungskomponente wirken.

Überraschenderweise kann diese Haftvermittlung ohne Einbuße der Haftungseigenschaften universell auf alle Vernetzungssysteme, auch auf unvernetzte TPE-O, übertragen werden. Des Weiteren ergab sich überraschenderweise, dass das erfindungsgemäße Konzept der Haftvermittlung unabhängig von der Härteeinstellung durch Variation des Anteil Polypropylen zu Kautschuk und Weichmacherölen über einen sehr großen Härtebereich, nämlich von Shore A 30 bis Shore D 60, ohne Einbuße der Haftungseigenschaften einstellbar ist.

### Detaillierte Beschreibung der Erfindung

Die olefinische thermoplastische Elastomerzusammensetzung weist eine Kautschukkomponente und ein Polyolefin sowie ein Haftvermittlersystem auf, wobei das Haftvermittlersystem seinerseits einen oder mehrere erste Haftvermittler aus der Gruppe der benetzenden Haftvermittler und einen oder mehrere zweite Haftvermittler aus der Gruppe der chemisch reaktiven Haftverbinder aufweist. Hierbei ist die Kautschukkomponente insbesondere vernetzbar im Falle der TPE-V.

Die thermoplastische Polyolefinkomponente ist erfindungsgemäß ein thermoplastisches kristallines oder teilkristallines Polyolefin-Homopolymer und/oder ein thermoplastisches kristallines oder teilkristallines Polyolefin-Copolymer. Deren Monoolefin-Monomer weist 2 bis 7 Kohlenstoffatome auf, insbesondere ist das Monomer gewählt aus: Ethylen, Propylen, 1-Buten, Isobutylen, 1-Penten, 1-Hexen, 1-Octen, 3-Methyl-1-Penten, 4-Methyl-1-Penten, 5- Methyl-1-Hexen. Bevorzugt weist das Monoolefin-Monomer 3 bis 6 Kohlenstoffatomen auf, ganz bevorzugt ist es Propylen.

Die insbesondere vernetzbare Kautschuk-Komponente ist gewählt aus: den Terpolymer-Kautschuken von Ethylen, Propylen und einem nicht-konjugierten Dien (EPDM) und/oder den Copolymeren, beispielsweise Ethylen-Propylen-Kautschuk (EPR) oder Ethylen/α-Olefin-Copolymer-Kautschuk (FAM) oder Ethylen/α-Olefin/Dien-Terpolymer-Kautschuk (EADM).

Das Haftvermittlersystem weist zwingend zwei Arten von Haftvermittlern auf:
Die Gruppe der Haftvermittler, die für eine optimale Benetzung sorgen, umfassen lonomere. Sie können auch Ethylen-Vinylacetat-Kautschuk (EVM) mit unterschiedlichen Vinylacetatgehalt und mit Maleinsäureanhydrid gepfropfte Polymere, wobei Polypropylen, Polyethylen, Polypropylen-Polyethylen-Copolymere, Poly-α-olefine, Ethylen-Propylen-Dien-Kautschuke und Polyamide deren polymeres Rückgrat bilden, umfassen.

Die Gruppe der Haftvermittler, die für eine chemische Reaktion zwischen TPE und Substrat sorgen, ist gebildet aus den Haftvermittlern mit einer der folgenden funktionellen Gruppen: Anhydrid, Epoxid, Silan und deren Ester, Carboxyl-Gruppe, Ester-Gruppe, Säurechlorid. Besonders geeignet sind Koppler aus der Gruppe der Maleinsäureanhydrid gepfropften Polymere, wobei deren polymeres Rückgrat gebildet ist durch Polypropylen, Polyethylen, Polypropylen-Polyethylen-Copolymere, Poly-α-olefine, Ethylen-Propylen-Dien-Kautschuk (EPDM), Polyamide, pfropfbare Siloxane, Vinylsiloxane und deren Ester, Epoxide wie Kettenverlängerer wie Epoxy- oder Glycidyl-Verbindungen.

Das Haftvermittlersystem weist zwei bis acht, insbesondere zwei bis sechs, besonders bevorzugt zwei bis vier Haftvermittler auf, von denen wie erwähnt mindestens je einer aus einer der beiden erforderlichen Haftvermittlergruppen stammt. Vorzugsweise sind die beiden Haftvermittlergruppen in gleichen Anteilen anwesend, dies ist jedoch nicht zwingend erforderlich. Erfindungsgemäß beträgt der Anteil des Haftvermittlersystems an der Zusammensetzung zwischen 0,5 und 25 Gew.-%, bevorzugt zwischen 1,0 und 15 Gew.-%, besonders bevorzugt zwischen 1,5 und 10 Gew.-%. Hierbei ist erfindungsgemäß vorgesehen, dass der Anteil einer Haftvermittlergruppe nicht unter 0,5 Gew.-% beträgt.

Weiterhin kann die erfindungsgemäße Zusammensetzung eine oder mehrere Additive enthalten, gewählt aus den verstärkenden und nicht-verstärkenden Füllstoffen, Verarbeitungsölen, verdünnenden bzw. streckenden Ölen, Weichmachern, Wachsen, Stabilisierungsmitteln, Antioxidantien, Vernetzungsmitteln, Verarbeitungshilfsstoffen, internen und externen Schmiermitteln, Pigmenten, Färbemitteln. Die Vernetzungsmittel können solche auf Phenol-Harz-Basis mit Zinnsalzen als Starter wie zum Beispiel kristallwasserhaltige und -freie Zinnhalogenide oder Zinnhalogenidbatche und Metalloxiden als Verzögerer
wie zum Beispiel Kalziumoxid, Magnesiumoxid und Zinkoxid sein.

Die Vernetzungsmittel können ebenfalls solche auf Basis von organischen Peroxiden und ein bis drei Coagentien sein wie modifizierte Acrylate, Methacrylate, Iso- bzw. Cyanurate, Polybutadiene, Dimaleinimide und andere wie zum Beispiel N,N'-m-Phenylendimaleinimide, Zinkdiacrylate, Triallylisocyanurate (TIAC), Triallylcyanurat (TAC), Trimethylolpropantriacrylate (TMPTA), Trimethylolpropantrimethacrylate (TRIM), 1,2-Polybutadien wie zum Beispiel flüssige Polybutadiene (Ricon 153) oder festes syndiotaktisches Polybutadien, Vinyl-, Propyl- oder ethoxygruppenhaltiges Polysiloxan und andere sein. Peroxide sind insbesondere Di-t-Butylperoxide, Dicumylperoxide, Di(t-butylperoxyisopropyl)benzen, 2,5-Dimethyl-2,5-di-(t-butylperoxy)hexan, 2,5-Dimethyl-2,5-di-(t-butylperoxy)hexin, 3,3,5,7,7-Pentamethyl-1,2,4-trioxepan. Für die TPE-O werden keine Vernetzungsmittel benötigt. Weitere Additive können sein Phenol-Harze mit einem Gewichtsanteil von 0.01 Gew.-% bis 15 Gew.-%, Zinnhalogenide mit einem Gewichtsanteil von 0.01 Gew.-% bis 5 Gew.-%, und Metalloxide mit einem Gewichtsanteil von 0 Gew.-% bis 3 Gew.-%. Weitere Additive einschließlich von Füllstoffen wie sie im "Rubber World Magazine Blue Book" und im "Zweifel et al., Plastics Additives Handbook, Hanser 2009" beschrieben sind, werden hier ausdrücklich in die Offenbarung mit einbezogen.

Die Füllstoffe und Streckmittel schließen herkömmliche anorganische Substanzen, wie Calciumcarbonat, Tone, Silica, Talk, Titandioxid und Ruß ein. Hierbei können insbesondere die Füllstoffe eine Vielzahl von Additiv-Wirkungen übernehmen. Im Allgemeinen sind geeignete Kautschuk-Verarbeitungsöle paraffinische, naphthalinische oder aromatische Öle, die von Petroleumfraktionen abgeleitet sind. Die Art des ausgewählten Öls kann eine sein, welche gewöhnlich in Kombination mit dem spezifischen Kautschuk oder Kautschuken der vorliegenden Zusammensetzung verwendet wird. Diese Additive können eine signifikante Menge der formulierten Gesamtzusammensetzung umfassen.

Als polare Substrate kommen neben Glas, Stahl, Metallen, polaren Polymeren wie Polyamide vor allem geeignete technische Harze in Betracht. Insbesondere ist die Erfindung geeignet, verschiedene Polyamide, beispielsweise ungefülltes Polyamid 6, ungefülltes Polyamid 66, gefülltes Polyamid 6 und gefülltes Polyamid 66, Bor-Gläser, Quarzgläser, Gläser, Metalle wie Aluminium, Eisen, Kupfer, Metalllegierungen wie Edelstahl, Stahl, V2A oder Messing, Bronze zu beschichten.

Die thermoplastische Elastomerzusammensetzung der vorliegenden Erfindung kann durch verschiedene Verfahren auf Substrate aufgebracht werden und erzeugt aufgrund ihrer Komposition eine Haftung ohne spezielle weitere Vorbereitung der Oberfläche. Gegebenenfalls ist die Oberfläche des Substrates Öl-frei zu halten und/oder zu erwärmen.

### Beispiele

Die in den folgenden Beispielen gegebenenfalls zu 100% fehlenden Anteile werden durch eines oder mehrere der oben genannten Additive gebildet.

Beispiel 1: Eine erfindungsgemäße thermoplastische Elastomerzusammensetzung ist gebildet durch 20%PP, 40% EPDM, 10% Füllstoffen und 20% Öl. Weiterhin enthalten sind 4% PP-g-MAH und 2% EPR-G-MAH. Das Vernetzungssystem ist ein phenolisches Vernetzungssystem. Beispiel 1 zeigt eine Shore Härte von 40D, eine Schälkraft von 815 N auf Aluminium, 830N auf Edelstahl und 780N auf Stahl. Die Fehlerart ist kohäsiv auf Aluminium und abschälend auf den beiden anderen Werkstoffen.

Beispiel 2: Eine erfindungsgemäße thermoplastische Elastomerzusammensetzung ist gebildet durch 20%PP, 37% EPDM, 10% Füllstoffen und 20% Öl. Weiterhin enthalten sind 6% PP-g-MAH und 3% lonomer. Das Vernetzungssystem ist ein phenolisches. Beispiel 2 zeigt eine Shore Härte von 40D, eine Schälkraft von 812N auf Aluminium, 793N auf Edelstahl und 822N auf Stahl. Die jeweilige Fehlerart ist kohäsiv.

Beispiel 3: Eine erfindungsgemäße thermoplastische Elastomerzusammensetzung ist gebildet durch 90,5% TPE-V. Weiterhin enthalten sind 7% PP-g-MAH und 2,5% lonomer. Das Vernetzungssystem ist Zweitextrusion. Beispiel 3 zeigt eine Shore Härte von 50A, eine Schälkraft von 226N auf Aluminium, 258N auf Edelstahl und 253N auf Stahl. Die jeweilige Fehlerart ist kohäsiv.

Beispiel 4: Eine erfindungsgemäße thermoplastische Elastomerzusammensetzung ist gebildet durch 90% TPE-V. Weiterhin enthalten sind 6% PP-g-MAH und 4% EPR-g-MAH. Vernetzungssystem ist Zweitextrusion. Beispiel 4 zeigt eine Shore Härte von 50A, eine Schälkraft von 258N auf Aluminium, 231N auf Edelstahl und 258N auf Stahl. Die jeweilige Fehlerart ist kohäsiv.

Beispiel 5: Eine erfindungsgemäße thermoplastische Elastomerzusammensetzung ist gebildet durch 7% Polypropylen, 54% EPDM, 10% Füllstoffen, 17% Öl. Weiterhin enthalten sind 4,5% PP-g-MAH und 4,5% EPR-g-MAH. Das Vernetzungssystem ist ein Phenolharz. Beispiel 5 zeigt eine Shore Härte von 55 A, eine Reißdehnung von 260%, ein σ-max von 4,1 MPa, eine Dichte von 0,961 g/cm³, eine Schälkraft von 67 N. Die Fehlerart ist kohäsiv.

Beispiel 6: Eine erfindungsgemäße thermoplastische Elastomerzusammensetzung ist gebildet durch 9% Polypropylen, 56% EPDM, 10% Füllstoffen, 12% Öl. Weiterhin enthalten sind 5% PP-g-MAH und 5% EPR-g-MAH. Das Vernetzungssystem ist ein Peroxid. Beispiel 6 zeigt eine Shore Härte von 55 A, eine Reißdehnung von 400%, ein σ-max von 5,1 MPa, eine Dichte von 0,940 g/cm³, eine Schälkraft von 84,6 N. Die Fehlerart ist kohäsiv.

Beispiel 7: Eine erfindungsgemäße thermoplastische Elastomerzusammensetzung ist gebildet durch 8% Polypropylen, 49% EPDM, 9% Füllstoffen, 22% Öl. Weiterhin enthalten sind 5% PP-g-MAH und 5% EPR-g-MAH. Das Vernetzungssystem ist ein Peroxid. Beispiel 6 zeigt eine Shore Härte von 55 A, eine Reißdehnung von 480%, ein σ-max von 4,3 MPa, eine Dichte von 0,913 g/cm³, eine Schälkraft von 81,5 N. Die Fehlerart ist kohäsiv.

Beispiel 8: Das letzte Beispiel wird gebildet durch 40% Polypropylen, 42% EPDM, 10% Füllstoffen. Weiterhin enthalten sind 5% PP-g-MAH und 2,5% lonomer. Beispiel 12 zeigt eine Shore Härte von 40 D, eine Schälzugfestigkeit von 354N auf Aluminium, 608 N auf Edelstahl, 576 N auf Stahl und 391 N auf verzinktem Stahl.

Ein Vergleichsbeispiel verwendet Santoprene 191-55PA. Das Vernetzungssystem ist ein Phenolharz. Vergleichsbeispiel 7 zeigt eine Shore Härte von 55 A, eine Reißdehnung von 290%, ein σ-max von 2,9 MPa, eine Dichte von 0,950 g/cm³, eine Schälkraft von nur 34,0 N. Die Fehlerart ist ablösend.

Die erfindungsgemäßen TPE-V werden in Mischaggregaten wie Einschneckenextrudern, Doppelschneckenextrudern, Banbury-Mischern oder ähnlichem hergestellt. Dies erfolgt entweder in einem Schritt, bei dem die Haftvermittlerkombination während des Vernetzungsschrittes in das Mischaggregat zugegeben wird oder alternativ in mehreren Schritten, wobei das fertige TPE-V in den Mischaggregaten nachträglich haftungsmodifiziert wird.

Durch die erfindungsgemäße Zubereitung lassen sich Haftungen ohne Vorbehandlung der polaren Oberflächen in einen oder mehreren Schritten erzeugen. Das fertige haftungsmodifizierte Compound wird direkt mittels einer Spritzgußmaschine auf ein polares Substrat aufgespritzt, welches erwärmt sein kann, insbesondere auf >50°C erwärmt sein kann. Es gelingen auch die direkte Coextrusion, der Zwei-Komponenten Spritzguss (auch als Overmolding), Comolding-Applikationen aber auch das Vorverspritzen von Platten oder komplexen Geometrien ohne Kleben im Werkzeug sowie das anschließende Pressen auf polaren Substraten wie Metall bzw. Glas-Bauteilen. Durch die gängigen Pressverfahren wie hydraulisches Pressen werden innerhalb von kurzen Presszeiten dauerhaft feste Metall-TPE-V-Verbundteile wie Metall-TPE-V-Metall-Sandwichstrukturen erhältlich, auch mit zwei unterschiedlichen Metallen wie Stahl und Aluminium. Damit ist die Verarbeitung nicht auf Schmelzeverfahren beschränkt.

Auch die Bildung von Sandwich-Strukturen aus zwei verschiedenen Metallen wie Stahl und Aluminium durch eine TPE-V Zwischenschicht ist aufgrund der Erfindung möglich, so dass sich neue vielfältige Möglichkeiten im Leichtbau ergeben, insbesondere lassen sich neue Bauteile in der Automobilindustrie, im Schiffbau, in der Elektro/Elektronikindustrie herstellen, die Metall-Polymerverbünde sind. Andere Branchen, in denen die Erfindung eingesetzt werden kann sind die Bauindustrie, der Bürobedarf, Haushaltswaren, Kosmetik, allgemein im Maschinenbau, der Medizintechnik, der Pharmaindustrie, der Möbelindustrie, der Verpackungsindustrie aber auch im Bereich der Sport- und Freizeitindustrie. Mit anderen Worten überall dort, wo gute Hafteigenschaften benötigt werden und Metall-Polymerverbünde sinnvoll einsetzbar sind.

Das fertige haftmodifizierte Compound kann dabei erfindungsgemäß direkt mittels einer Spritzgussmaschine (SGM) auf ein polares Substrat aufgetragen werden, dessen Oberflächentemperatur im Fall eines Polymersubstrates > 50 °C sein sollte. Bei Metallen, Metalllegierungen und/oder Blends sollte die Oberflächentemperatur > 60 °C sein, was beispielsweise durch Wasser- oder Öl-Thermostate, Induktionsheizung, etc. erreicht werden kann. Anorganische Substrate wie Stahlbleche müssen ölfrei sein.

Die Anwendung gelingt auch bei einer Coextrusion wenn das haftungsmodifizierte TPE-V auf ein warmes polares Substrat aufgebracht wird, für Metalle gelten die gleichen Einschränkungen wie bei den SGM-Methoden.

Die Verarbeitung beschränkt sich aber nicht auf Schmelzeverfahren, es können auch Platten und andere Geometrien ohne Anhaftung in den Werkzeugen vorverspritzt werden und mit polaren Substraten, hier sind vor allem Metallbauteile gemeint, durch Pressverfahren in gängigen Pressen, wie z.B. hydraulischen Pressen, innerhalb kürzester Zeit haftend verpresst werden. Auch hier müssen die Metallteile nur öl-frei sein. Durch das Pressen entstehen hier feste Metall-TPE-V-Verbundteile, wobei auch Metall-TPE-V-Metall-Sandwich-Strukturen realisierbar sind, auch mit zwei verschiedenen Metallsorten, z.B. Stahl-TPE-V-Aluminium-Verbunde.

Die Härte der modifizierten TPE-V ist im Bereich A30 bis D60 ohne Einbuße der Haftungskräfte durch Rezepturänderung erreichbar.

## Patentansprüche

1. Olefinische thermoplastische Elastomerzusammensetzung, aufweisend eine Kautschuk-Komponente und ein Polyolefin, weiter aufweisend ein Haftvermittlersystem, seinerseits aufweisend einen oder mehrere erste Haftvermittler aus der Gruppe der benetzenden Haftvermittler und einen oder mehrere zweite Haftvermittler aus der Gruppe der chemisch reaktiven Haftverbinder und ein oder mehrere Additive, gewählt aus den verstärkenden und nicht-verstärkenden Füllstoffen, Verarbeitungsölen, verdünnenden bzw. streckenden Ölen, Weichmachern, Wachsen, Stabilisierungsmitteln, Antioxidantien, Vernetzungsmitteln, Verarbeitungshilfsstoffen, internen und externen Schmiermitteln, Pigmenten, Färbemitteln, wobei die thermoplastische Polyolefinkomponente ein thermoplastisches kristallines oder teilkristallines Polyolefin-Homopolymere und/oder ein thermoplastisches kristallines oder teilkristallines Polyolefin-Copolymer ist, deren Monoolefin-monomer 2 bis 7 Kohlenstoffatome aufweist, gewählt aus: Ethylen, Propylen, 1-Buten, Isobutylen, 1-Penten, 1-Hexen, 1-Octen, 3-Methyl-1-penten, 4-Methyl-1-penten, 5- Methyl-1-hexen, wobei die Kautschuk-Komponente gewählt ist aus: den Terpolymer-Kautschuken von Ethylen, Propylen und einem nicht-konjugierten Dien (EPDM) und/oder einem Copolymer, nämlich Ethylen-Propylen-Kautschuk, EPR, Ethylen/α-Olefin-Copolymer- Kautschuk (FAM), -Ethylen/ α-Olefin/Dien-Terpolymer-Kautschuk (EADM), wobei die Gruppe der benetzenden Haftvermittler gebildet ist aus den lonomeren, wobei dass die Gruppe der chemisch reaktiven Haftvermittler gebildet ist aus Maleinsäureanhydrid gepfropften Polymeren, wobei deren polymeres Rückgrat gebildet ist durch Polypropylen, Polyethylen, Polypropylen-Polyethylen-Copolymere, Poly-α-olefine, Ethylen-Propylen-Dien-Kautschuk (EPDM) und Polyamide und gebildet ist aus den pfropfbaren Siloxanen, den Epoxiden, Epoxy- bzw. Glycidyl-Verbindungen, wobei der Anteil des Haftvermittlersystems an der Zusammensetzung zwischen 1,5 und 10 Gew.- %, beträgt.

2. Olefinische thermoplastische Elastomerzusammensetzung gemäß Anspruch 1, **dadurch gekennzeichnet, dass** das Monoolefin-Monomer der thermoplastischen Polyolefinkomponente 3 bis 6 Kohlenstoffatomen aufweist und bevorzugt Propylen ist.

3. Olefinische thermoplastische Elastomerzusammensetzung, nach einem der vorherigen Ansprüche, **dadurch gekennzeichnet, dass** das Haftvermittlersystem zwei bis acht, insbesondere zwei bis sechs, besonders bevorzugt zwei bis vier Haftvermittler aufweist.

4. Verfahren zur Herstellung eines haftungsmodifizierten TPE-V, TPE-O gemäß einem der vorherigen Ansprüche in einem Schritt, bei dem die Haftvermittlerkombination während des Vernetzungsschrittes zugegeben wird oder bei dem in mehreren Schritten mittels Mischaggregaten wie Einschneckenextrudern, Doppelschneckenextrudern, Banbury Mischer das fertige TPE-V Compound nur noch nachträglich haftungsmodifiziert wird.

5. Verwendung eines haftungsmodifzierten TPE-V, TPE-O gemäß einem der vorherigen Ansprüche zur Herstellung von Bauteilen in der Automobilindustrie, im Schiffbau, im Maschinenbau, in der Elektro/Elektronikindustrie, der Bauindustrie, der Medizintechnik, der Pharmaindustrie, der Möbelindustrie, der Verpackungsindustrie, der Sport- und Freizeitindustrie, im Bereich Bürobedarf, Haushaltswaren, Kosmetik zur Herstellung von Metall-Polymerverbünden.

## Claims

1. Olefinic thermoplastic elastomer composition, comprising a rubber component and a polyolefin, further comprising an adhesion promoter system, which in turn comprises one or more first adhesion promoters from the group of wetting adhesion promoters, one or more second adhesion promoters from the group of chemically reactive adhesion promoters, and one or more additives, selected from the reinforcing and non-reinforcing fillers, processing oils, diluting or extending oils, plasticisers, waxes, stabilisers, antioxidants, crosslinking agents, processing aids, internal and external lubricants, pigments and colouring agents, wherein the thermoplastic polyolefin component is a thermoplastic crystalline or semi-crystalline polyolefin homopolymer and/or a thermoplastic crystalline or semi-crystalline polyolefin Copolymer, the mono-olefin monomer of which comprises 2 to 7 carbon atoms, selected from! ethylene, propylene, 1-butene, isobutylene, 1-pentene, 1-hexene, 1-octene, 3-methyl-1-pentene, 4-methyl-1-pentene and 5-methyl-1-hexene, wherein the rubber component is selected from the terpolymer rubbers of ethylene, propylene and a non-conjugated diene (EPDM) and/or a copolymer, specifically ethylene propylene rubber (EPR), ethylene/α-olefin copolymer rubber (FAM) or ethylene/α-olefin/diene terpolymer rubber (EADM), wherein the group of wetting adhesion promoters is formed of ionomers, wherein the group of chemically reactive adhesion promoters is formed of maleic acid anhydride-grafted polymers, wherein the polymeric backbone thereof is formed by polypropylene, polyethylene, polypropylene-polyethylene copolymers, poly-α-olefins, ethylene-propylene-diene rubber (EPDM) and polyamides and is formed of graftable siloxanes, epoxides or epoxy or glycidyl compounds, wherein the proportion of the adhesion promoter system in the composition is between 1.5 and 10 wt-%.

2. Olefinic thermoplastic elastomer composition according to claim 1, **characterised in that** the mono-olefin monomer of the thermoplastic polyolefin component comprises 3 to 6 carbon atoms and is preferably propylene.

3. Olefinic thermoplastic elastomer composition according to either of the preceding claims, **characterised in that** that the adhesion promoter system comprises two to eight, in particular two to six, particularly preferably two to four, adhesion promoters. ;

4. Method for producing an adhesion-modified TPE-V or TPE-O according to any of the preceding claims in one step, in which the adhesion promoter combination is added during the crosslinking step, or in a plurality of steps, in which the finished TPE-V compound is only subsequently adhesion-modified by means of mixing units such as single-screw extruders, twinscrew extruders or Banbury mixers.

5. Use of an adhesion-modified TPE-V or TPE-O according to any of the preceding claims for producing components in the automotive industry, shipbuilding, mechanical engineering, the electrical/electronics industry, the construction industry, medical engineering, the pharmaceutical industry, the furniture industry, the packaging industry, the sports and leisure industry, in the fields of office supplies, household goods and cosmetics, in order to produce metal polymer composites.

## Revendications

1. Composition élastomère oléfinique thermoplastique, présentant un composant de caoutchouc et une polyoléfine, présentant en outre un système adhésif présentant lui-même un ou plusieurs premiers adhésifs du groupe des adhésifs mouillants et un ou plusieurs deuxièmes adhésifs du groupe des adhésifs réactifs chimiquement et un ou plusieurs additifs, choisis parmi les agents de charge de renforcement et de non-renforcement, des huiles de traitement, des huiles de dilution ou d'allongement, des plastifiants, des cires, des stabilisants, des antioxydants, des agents de réticulation, des auxiliaires de traitement, des lubrifiants internes et externes, des pigments, des colorants, dans laquelle le composant polyoléfinique thermoplastique est un homopolymère polyoléfinique thermoplastique cristallin ou partiellement cristallin et/ou un copolymère polyoléfinique thermoplastique cristallin ou partiellement cristallin dont le monomère mono-oléfinique présente 2 à 7 atomes de carbone, choisi parmi : l'éthylène, le propylène, le 1-butène, l'isobutylène, le 1-pentène, le 1-hexène, le 1-octène, le 3-méthyl-1-pentène, le 4-méthyl-1-pentène, le 5-méthyl-1-hexène, dans laquelle le composant caoutchouc est choisi parmi : les caoutchoucs terpolymères d'éthylène, de propylène et d'un diène non conjugué (EPDM) et/ou un copolymère, à savoir le caoutchouc éthylène-propylène, l'EPR, un caoutchouc de copolymère d'éthylène/α-oléfine (FAM), un caoutchouc de terpolymère d'éthylène/α-oléfine/diène (EADM), dans laquelle le groupe des adhésifs mouillants est formé des ionomères, dans laquelle le groupe des adhésifs réactifs chimiquement est formé de polymères greffés avec de l'anhydride d'acide maléique, dans laquelle la structure polymérique de ceux-ci est formée par un polypropylène, un polyéthylène, des copolymères de polypropylène-polyéthylène, des poly-α-oléfines, un caoutchouc éthylène-propylène-diène (EPDM) et des polyamides et est formé des siloxanes pouvant être greffées, des époxydes, de composés époxy ou glycidyle, dans laquelle la proportion du système d'adhésif dans la composition se situe entre 1,5 et 10 % en poids.

2. Composition élastomère oléfinique thermoplastique selon la revendication 1, **caractérisée en ce que** le monomère mono-oléfinique du composant polyoléfinique thermoplastique présente 3 à 6 atomes de carbone et est de préférence un propylène.

3. Composition élastomère oléfinique thermoplastique selon l'une des revendications précédentes, **caractérisée en ce que** le système adhésif présente deux à huit, en particulier deux à six, de manière particulièrement préférée deux à quatre, adhésifs.

4. Procédé de production d'un TPE-V, TPE-O à adhérence modifiée selon l'une des revendications précédentes, en une étape, dans lequel la combinaison d'adhésif est ajoutée pendant l'étape de ramification ou dans lequel, en plusieurs étapes au moyen de dispositifs de mélange tels que des extrudeuses à une vis, des extrudeuses à deux vis, des mélangeurs Banbury, le composé de TPE-V fini ne présente qu'ultérieurement une adhérence modifiée.

5. Utilisation d'un TPE-V, TPE-O à adhérence modifiée selon l'une des revendications précédentes, pour la production de composants dans l'industrie automobile, dans la construction navale, dans le génie mécanique, dans l'industrie électrique/électronique, la construction, la technique médicale, l'industrie pharmaceutique, l'industrie du meuble, l'industrie de l'emballage, l'industrie du sport et des loisirs, dans le domaine des accessoires de bureau, des articles ménagers, de la cosmétique pour la production de composites de métal-polymère.
